# EUROPEAN PATENT SPECIFICATION

(11) **EP 1 373 056 B1**
(45) Date of publication and mention of the grant of the patent: **26.04.2006**
(21) Application number: 02712030.2
(22) Date of filing: 04.02.2002
(51) Int. Cl.: B62D 31/02, A61G 3/06, B60P 1/43

(54) **PASSENGER SERVICE VEHICLE**
PERSONENBEFÖRDERUNGSFAHRZEUG
VEHICULE DE SERVICE POUR PASSAGERS

(30) Priority: 29.03.2001 GB 0107832
(43) Date of publication of application: 02.01.2004
(73) Proprietor: Wrightbus Limited, Ballymena BT42 1PY, Co. Antrim, Northern Ireland (GB)
(72) Inventor: ERSKINE, Samuel Trevor, Ballymena, Co. Antrim BT42 1QL, Northern (GB)
(74) Representative: Earnshaw, Geoffrey Mark
(86) International application number: PCT/GB2002/000477
(87) International publication number: WO 2002/079020

(56) References cited:
- BE-A- 1 007 255
- DE-A- 3 841 017
- NL-A- 8 800 604
- "WRIGHT CRUSADER EASY-ACCESS BUS" AUTOMOTIVE ENGINEER, MECHANICAL ENGINEERING PUBL.LTD. BURY ST.EDMUNDS, GB, vol. 20, no. 4, 1 August 1995 (1995-08-01), page 44 XP000520421 ISSN: 0307-6490

## Description

The present invention relates to passenger service vehicles particularly but not exclusively high floor buses and coaches, designed to be accessible to and carry disabled passengers in wheelchairs.

Presently, it is impossible or practically not worth while for passenger service vehicles such as coaches to carry wheelchair-bound passengers. Most coaches have step-up entrances and are generally designed to have at least one or more steps from the entrance to a raised gangway, all of which are difficult if not impossible barriers and obstacles for wheelchair bound passengers to negotiate. Passenger service vehicle operators are also reluctant to provide space for wheelchair-bound passengers due to the inevitable loss of revenue from the space occupied by the wheelchair to be comfortably and securely positioned in the bus or coach, valuable space that would otherwise be used for able-bodied passenger-seating. Such a loss of passenger capacity could give rise to significantly decreased income per bus or coach on top of the extra time required to lift the wheelchair-bound passenger into and out of the vehicle. The time involved in boarding and disembarking a wheelchair-bound passenger could also affect the operator's punctuality on scheduled service routes. One solution, an onboard lift, would still reduce the vehicle luggage and seating capacity.

Hence, wheelchair-bound passengers have not been provided with easy or any access to inter-urban buses or coaches and have been deprived of such public transport. In response to this, new UK legislation will require new coaches sold for operation on local and scheduled services in the UK to be accessible for at least one wheelchair-bound passenger.

It is recognised that buses having an area for a wheelchair are known, from e.g. "Wright Crusader easy-access bus" Automotive Engineer, vol 20 (1995), no. 4, 1. Aug. 1995, pp 44, DE 3841017A1, BE 1007255 and NL 8800604. However, the wheelchairs are located in inconvenient positions. In DE 3841017 and NL 8800604, the wheelchair is actually situated below an elevated position of the bus driver.

It is an object of the present invention to provide space within a passenger service vehicle for a wheelchair-bound passenger who can board and disembark relatively easily and timely, and to minimise the revenue lost by the passenger service vehicle operator due to a reduction in vehicle seat capacity.

Thus, according to one aspect of the present invention, there is provided a passenger service vehicle as Claimed in Claim 1.

The passenger service vehicle may be any suitable vehicle designed or adapted to carry passengers such as a coach or a bus. This includes single, double-decker and/or articulated buses and coaches, particularly high floor vehicles having one or more steps between the entrance platform area and the main passenger gangway. The front chassis assembly portion is preferably a 'drop frame' assembly, and the entrance platform area is generally regarded as the 'low floor front area'.

With the invention, able-bodied passengers can freely enter and exit the vehicle while the entrance platform area still provides easy access to and secure space for a wheelchair-bound passenger in front of the front wheels of the vehicle. Meanwhile, the vehicle has wholly or substantially maintained the same number of able-bodied seats, and thus general passenger revenue. The overall length of the vehicle need not change.

The entrance platform area is beside the driver of the vehicle, and substantially forward of or adjacent to any steps leading to seating for able-bodied passengers. The serviceway may be in front of or behind the wheelchair secure space. Indeed, the two may be changeable around the entrance platform area.

In one embodiment of the present invention, the front assembly chassis portion is formed to provide and support the entrance platform area defined herein above. Such a chassis portion may be longer than "normal", i.e. currently made front assembly chassis for 12 meter coaches and buses in the UK, which chassis are well known in the art.

In another embodiment, the front chassis assembly portion is extended. Such an extension of the front chassis assembly portion can be carried out during the design stage of the chassis, or possibly after its production, so as to provide the required space in the entrance platform area.

The front chassis assembly portion could be longer or extended by any suitable length, possibly in the region of 200mm, 300mm, 350mm or more. However, the length must take account of the approach angle that is measured between the ground level and the front edge of the vehicle. (The front edge can be raised or lowered, even once the vehicle is manufactured, e.g. by a ferry lift).

Preferably any extension of the chassis portion occurs between the front wheel section and the front of the chassis portion; more preferably between the generally standard positions of the steering box and the steering column. The extension could also be added to the front of the chassis portion. Naturally, the dimensions of the vehicle should still comply with the all legal requirements in force at the time of vehicle production.

The vehicle should also have adequate securing means to secure the wheelchair to the vehicle, and to provide a safe and comfortable journey for the wheelchair-bound passenger. The wheelchair securing means may be any suitable means adapted to secure a wheelchair to one or more suitable parts or portions of the vehicle to provide sufficient securement and safety of the wheelchair and its occupant during movement of the vehicle. The means to secure the wheelchair may need to comply with local legal requirements. Separate means to secure the wheelchair occupant to the vehicle may also be necessary or required, such as a safety belt or strap.

The vehicle may have one, two or more doors for the entrance platform area. Preferably the wheelchair securing space is adjacent to a suitably wide and suitably positioned door that allows for easy boarding and disembarking by the wheelchair-bound passenger, with an adjacent door for able-bodied passengers. Suitable doors include plug doors, hinged doors or one or more sliding doors, and combinations thereof.

In one embodiment of the present invention, the entrance platform area has a partition means to partition the wheelchair space from the able bodied passenger serviceway. The partition means may be permanent, moveable or removable. It may be any suitable means able to divide an area, such as a wall, rail, or a screen, or a series of items such as straps, pins, poles, etc. The partition means or part thereof may be moveable or removable to increase the serviceway area in the absence of an occupied wheelchair.

The occupant of the wheelchair transportable by the present invention can face forwardly, for example where the vehicle is a coach. However, the vehicle may be arranged to carry the wheelchair occupant rearwardly, for example where the vehicle is an urban bus, and especially where the design of the wheelchair space and the partition means meet local legal requirements. This means that a rearward facing wheelchair occupant need not necessarily be secured to the partition means or the floor, thereby facilitating the operation of boarding and alighting the vehicle without assistance.

Vehicle design allows the forward or rearward facing arrangement to be provided by the manufacturer.

Preferably, the vehicle also includes means to enable easy loading and unloading of a wheelchair and person. Such means may be for example a book leaf ramp or a lifting means or one or more other known ramp means locatable between the entrance of the vehicle and the ground surface. The means may be manual but is preferably automatic.

In a further embodiment of the present invention, the wheelchair securing space may be adapted to provide seating for at least one able bodied passenger in the absence of a wheelchair passenger.

Indeed, the absence of a wheelchair passenger provides a space which is available for any number of temporary or at least semi-permanent uses, such as storage, a toilet facility, refreshment and entertainment facilities, etc. Such further uses may be more frequently used than the wheelchair use, and the present invention therefore extends to providing a passenger service vehicle wherein the entrance platform area provides an able bodied passenger serviceway and a delineateable space therewith.

The present invention applies equally to left hand and right hand drive vehicles.

The present invention may also provide means to assist manoeuvring of the wheelchair in the entrance platform area, such as a turntable or similar, preferably flush with the floor.

Embodiments of the present invention will now be described by way of example only and with reference to the accompanying drawings in which:
Figure 1 is a side view of an extended front chassis assembly for use in the present invention;
Figure 2 is a plan view of the assembly of Figure 1;
Figure 3 is a part internal and part external side view of the front part of a coach according to a first embodiment to the present invention;
Figure 4 is a plan internal view of the coach part of Figure 3;
Figures 5A and 5B are internal and side views respectively of the full coach of Figures 3 and 4; and
Figures 6A and 6B are internal plan and side views respectively of a low floor bus according to a second embodiment of the present invention.

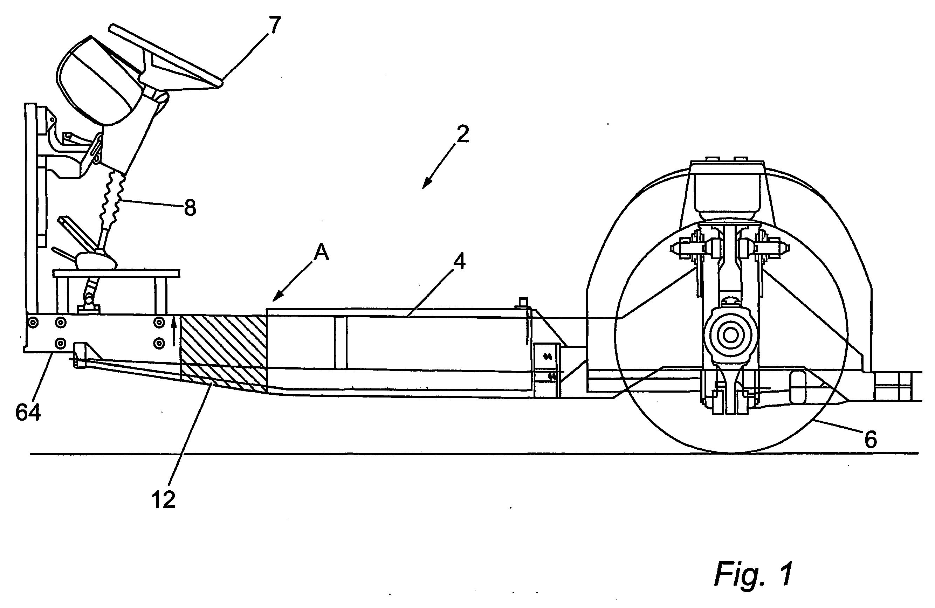

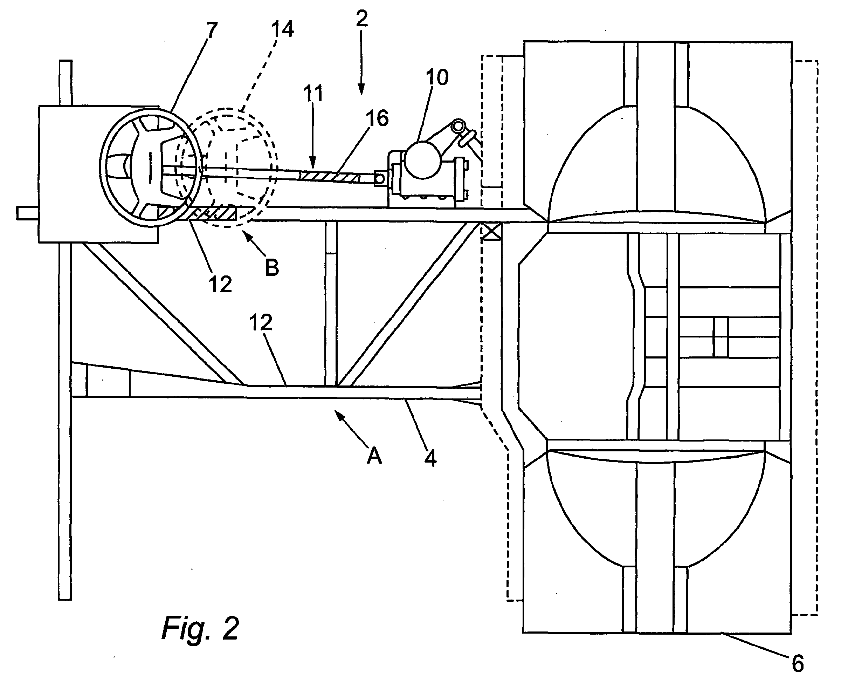

Referring to the drawings, Figures 1 and 2 show a front assembly chassis 2. The front assembly chassis 2 generally comprises a frame 4 formed from steel struts and members welded together, two front wheels 6, a steering wheel 7 and a steering column 8, which is connected to a steering box 10 through steering rod 11.

The front assembly chassis 2 has been extended from the "normal" length of a front assembly chassis known in the art, by the addition of two extension pieces 12. This extension is achieved by cutting the frame 4 at any suitable point or points, (and two different points are shown at A and B in Fig 2), and securing, by any known safe and acceptable method such as welding or bolting, etc., the extension pieces 12 between the cut faces. The extension pieces 12 are in this example approximately 350mm long. The steering rod 11 is also extended in a similar manner, again using a safe and acceptable method of inserting an extension piece 16.

Figure 2 shows in dash the position of the steering wheel 14 for a "normal" length front assembly chassis, and the new position of the steering wheel 7 following the extension of the front assembly chassis 2.

In a first alternative, one or more extension pieces are added at the front of the front assembly chassis 2. One way of achieving this is to unbolt the steering and peddle assemblies 64 from the front section of the front assembly chassis 2 (shown in Fig 1), add an extension piece(s) to the front of this section, and then re-bolt the steering and peddle assemblies to the extension piece(s).

In a second alternative, the front assembly chassis (and steering rod if relevant) do not require any cutting or extension, but are formed from steel struts and/or members being 350mm longer than "normal", i.e. as currently used in 12 meter coaches and buses in the UK.

Where the length of the overall vehicle must remain at a legal maximum, a consequence of having a longer or extended front assembly chassis 2 is that the vehicle mid-section subframe (not shown) situated between the front assembly chassis 2 and the rear assembly chassis (not shown) must be produced to a shorter length than usual, i.e. approximately 350mm shorter. In the UK, the legal maximum of coaches and buses is currently 12 meters. If the legal length maximum is different or changes, the subframe can be any length desired.

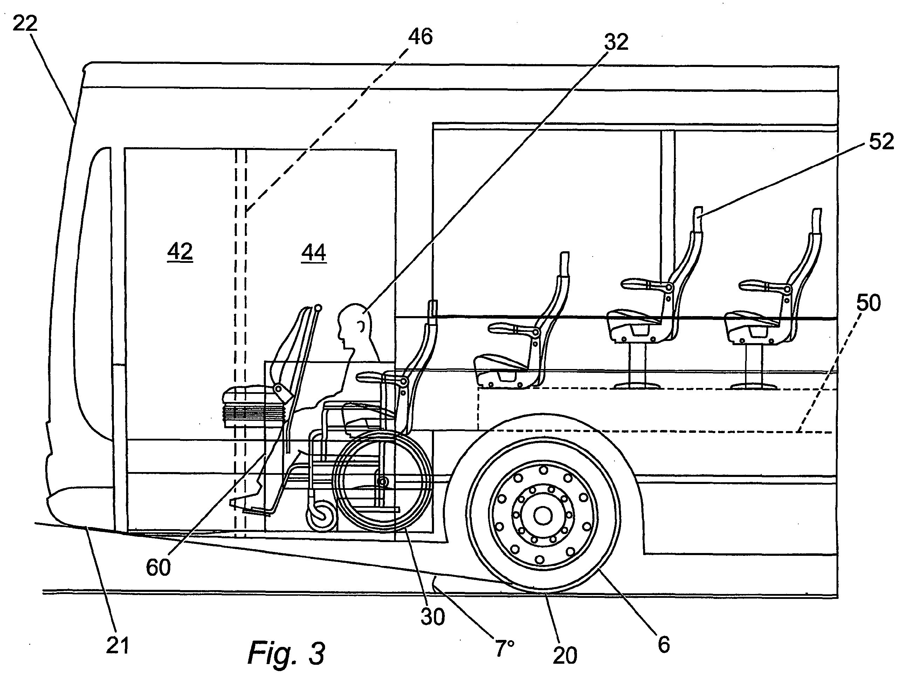

One feature of the longer front assembly chassis 2 is that it maintains an acceptable approach angle, e.g. an approximate 7° incline from the front wheel footprint 20 to the bottom edge 21 of the finally formed high floor coach 22 (shown in Fig 3).

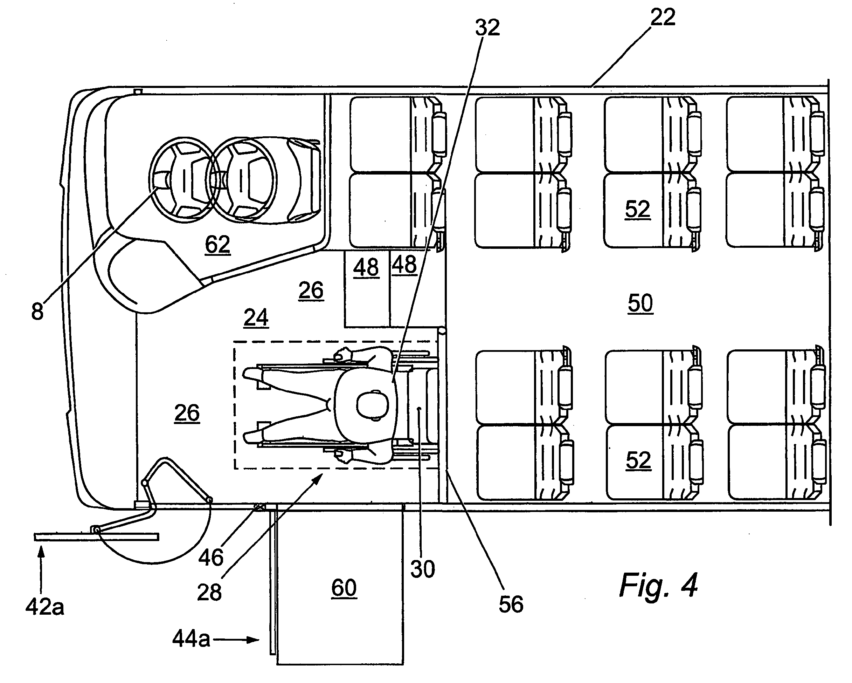

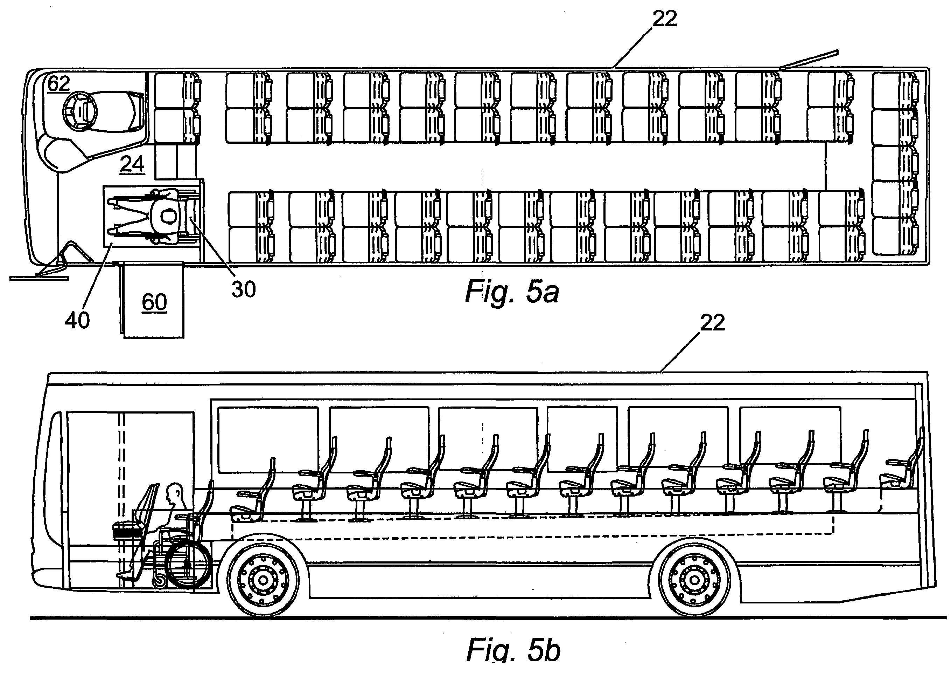

As shown in Figures 3 and 4, the length of the front assembly chassis 2 occurring between the front wheels 6 and the driver's steering column 8 provides the necessary extra space for the provision of an enlarged entrance platform area 24. The entrance platform area 24 can be divided into two parts, a serviceway 26 for able bodied passengers and a space 28 for a wheelchair 30 and wheelchair-bound passenger 32. The floor of the entrance platform area 24 may be visually marked (e.g. outline 40 in Fig 5A) to delineate the serviceway 26 and secure space.

The entrance platform area 24 has an entrance divided into two sections 42 and 44. The sections 42, 44 are a closed plug door 42A and a hinged door 44A respectively, meeting (when closed) along pillar 46.

The serviceway 26 leads to stairs 48 which then lead to a gangway 50 for access to seats 52 for able-bodied passengers.

The secured space 28 set aside for the wheelchair-bound passenger 32 must, in the UK, be at least 750 x 1300mm. The wheelchair 30 is secured to a bulkhead 56 by suitable clasp means (not shown). Such clasp means may be any suitable means known in the art. The wheelchair 30 could also be secured to the floor of the entrance platform area 24 again by suitable clasping means.

The serviceway 26 still provides sufficient area around the wheelchair 30 and the wheelchair-bound passenger 32 to enable able-bodied passengers to board or alight the coach 22 through the first entrance portion 42.

The wheelchair-bound passenger 32 is able to board and alight the coach 22 via the second entrance portion 44. For this, the coach 22 includes a book leaf ramp 60. Figure 3 shows the ramp 60 in a vertically stored position located adjacent the second entrance portion 44. The ramp 60 is hinged or otherwise rotatable along its bottom edge, so as to extend outwardly to its second position as shown in Figure 4. The second position provides a substantially smooth passage between the ground surface and the entrance platform area 24.

In use, able-bodied passengers are able to board and alight the coach through the first entrance section 42, along the serviceway 26 and past the driver's area 62 towards the stairs 48 and then the gangway 50 and seats 52. In addition, a wheelchair-bound passenger 32 can independently board the coach 22 using the ramp 60 in its extended second position to enter the coach 22 through the second entrance section 44. Once in the entrance platform area 24, the wheelchair passenger 32 can manoeuvre or can be manoeuvred into the secured space 28 such that the frame and/or wheels of the wheelchair 30 are secured to a relevant partition 56 and/or the floor of the entrance platform area 24. This situation is reversed for the wheelchair-bound passenger 32 to alight the coach 22.

Figures 5A and 5B show the full coach 22 with all able-bodied seats. As can be seen, the provision of the secure space 28 for the occupied wheelchair 30 has minimal effect on the passenger capacity of the coach 22.

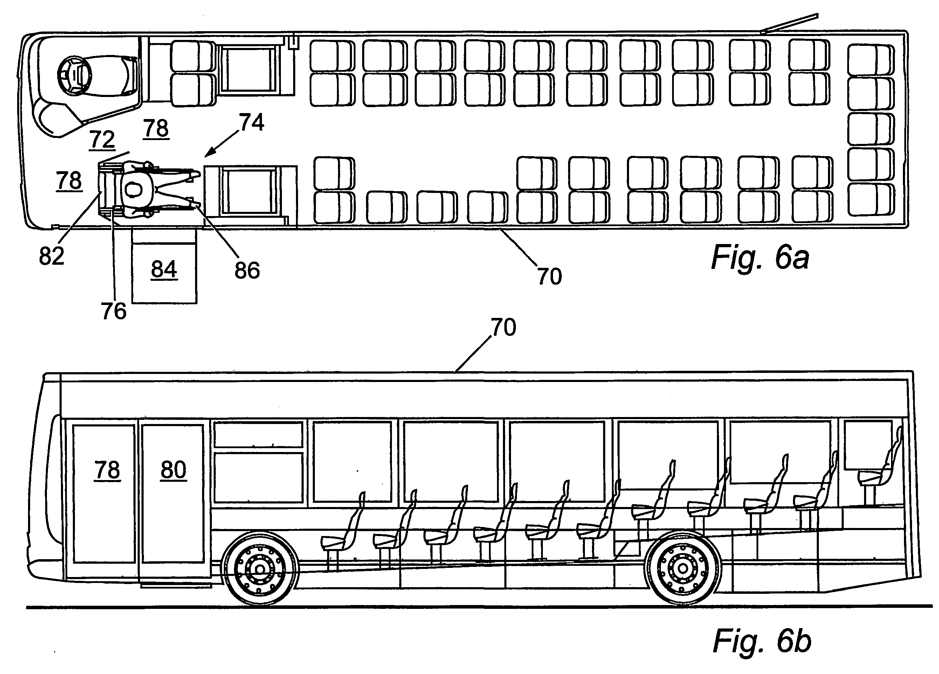

Figures 6A and 6B show a low floor bus 70, generally used in urban areas. The bus 70 has a longer or extended front chassis assembly portion (not shown) whose extended length provides an entrance platform area 72 able to accommodate a secure space 74 for an occupied wheelchair 76 as well as an able bodied passenger serviceway 78. The entrance platform area 72 is accessible by two entrance sections 78, 80.

The separate entrance section 80 and ramp 84 (preferably automatic in this example, and shown extended in Fig 6A) allow the wheelchair passenger 86 to board or alight the low floor bus 70 without assistance from the driver. This is particularly useful where the driver cannot or is not allowed to leave the driver area for safety or other reasons.

The entrance platform area 72 includes a barrier 82 to partition the serviceway 78 and the secured space 74. The partition 82 also allows the wheelchair 76 to be secured (by suitable securing means as previously described) in a rearward facing position if desired, although securement may not be necessary.

If necessary or desired, the barrier 82 could be movable forwardly along with the wheelchair 76, such that the second entrance section 80 now forms the start of the serviceway for able bodied passengers.

The barrier 82 could be a permanent wall, or just a rail, secured to a stanchion located near the centre of the entrance platform area 72. The stanchion and/or rail could be removable when not required for a wheelchair passenger.

The present invention provides an efficient and effective arrangement for the accommodation of at least one wheelchair passenger in the entrance area of passenger service vehicles, particularly high floor coaches, with minimal change to the vehicle, i.e. a longer or extended front assembly chassis portion, combined with a shorter than usual mid-scetion subframe which also provides sufficient space and passage for able-bodied people to board, find seating and disembark. Furthermore, a minimal loss of seating for able-bodied passengers is achieved even with a reduction in the subframe length.

It is believed that this invention will cost less than the combination of wheelchair lifts and removable or hinged seats otherwise required and also that the wheelchair passenger will be able to board and disembark faster and more easily, and with much less disruption to the driver and vehicle seating layout.

It is also possible that the aisle side seat behind the driver would be reserved for the wheelchair passenger's helper/companion to enable easy observation and communication. Furthermore the area reserved for the wheelchair-bound passenger may if desired be useable for other facilities or services, such as moveable or removable, e.g. foldable, seats that can be used by able-bodied passengers when this particular area is not in use.

## Claims

1. A passenger service vehicle (22, 70) having a front chassis assembly portion (2) and a rear chassis assembly portion, and a vehicle entrance platform for passenger access to the vehicle (22, 70), the vehicle entrance platform being located wholly or substantially above the upper part of the front chassis assembly portion (2) and beside the driver's area,
**characterised in that**
the length of the front chassis assembly portion (2) between the front wheels (6) and the front of the portion (2) provides an entrance platform area (24, 72) able to accommodate a secure space (28, 74) for an occupied wheelchair (30) and an able-bodied passenger serviceway (26, 78).

2. A passenger service vehicle according to Claim 1 wherein the vehicle (22, 70) is a high floor vehicle having one or more steps (48) between the entrance platform area (24, 72) and a main passenger gangway (50).

3. A passenger service vehicle according to Claim 1 wherein the vehicle is a low floor vehicle (70).

4. A passenger service vehicle according to any one of Claims 1 to 3 wherein the front chassis assembly portion (2) is formed to provide the entrance platform area (24, 72).

5. A passenger service vehicle according to any one of Claims 1 to 3 wherein the front chassis assembly portion (2) incorporates extension pieces (12) .

6. A passenger service vehicle according to Claim 5 wherein the extension pieces (12) are more than 100mm long.

7. A passenger service vehicle according to Claim 5 or Claim 6 wherein the extension pieces (12) are incorporated after production of the chassis portion.

8. A passenger service vehicle according to any one of Claims 5 to 7 wherein the front chassis assembly portion (2) is extended between the front wheel section and the front of the chassis portion.

9. A passenger service vehicle according to Claim 8 wherein the chassis portion is extended between the steering box (10) and the steering column (8).

10. A passenger service vehicle according to any one of the preceding Claims wherein one or more securing means are provided for securing a wheelchair (30) to the vehicle (22, 70).

11. A passenger service vehicle according to any of the preceding Claims having one, two or more doors (42A, 44A) for the entrance platform area (24, 72).

12. A passenger service vehicle according to Claim 11 having one door (44A) adjacent to the wheelchair secure space (28, 74), and one door (42A) for the able-bodied passenger serviceway (26, 78).

13. A passenger service vehicle according to any one of the preceding Claims having means for the wheelchair (30) and wheelchair-bound passenger (32, 86) to board and alight the vehicle (22, 70).

14. A passenger service vehicle according to Claim 13 wherein the means comprises a ramp means (60) or a lifting means locatable between the entrance of the vehicle and the ground surface.

15. A passenger service vehicle according to Claim 13 or Claim 14 wherein the means is manually operated.

16. A passenger service vehicle according to Claim 13 or Claim 14 wherein the means is automatically operated.

17. A passenger service vehicle according to any one of the preceding Claims wherein the wheelchair securing space (28, 74) provides useable space in the absence of a wheelchair passenger.

18. A passenger service vehicle according to Claim 17 wherein the space (28, 84) is a seating space for at least one able bodied passenger.

19. A passenger service vehicle according any one of the preceding Claims wherein the entrance platform area (24, 72) has a partition means to partition the wheelchair space (28, 74) and the able bodied passenger serviceway (26, 78).

20. A passenger service vehicle according to Claim 19 wherein all or part of the partition means is movable and/or removable.

21. A passenger service vehicle according to any one of the preceding Claims wherein the wheelchair space (28, 74) allows the wheelchair occupant (32, 86) to face rearwardly during transportation.

22. A passenger service vehicle according to any one of the preceding Claims wherein the wheelchair space (28, 74) and serviceway (26, 78) are relocatable within the entrance platform area (24, 72).

## Patentansprüche

1. Ein Personenbeförderungsfahrzeug (22, 70) mit einem vorderen Chassisanordnungsabschnitt (2) und einem hinteren Chassisanordnungsabschnitt, und einer Fahrzeugeingangsplattform für den Personenzugang zu dem Fahrzeug (22, 70), wobei die Fahrzeugeingangsplattform vollständig oder im Wesentlichen über dem oberen Teil des vorderen Chassisanordnungsabschnitts (2) und neben dem Fahrerbereich angeordnet ist,
**dadurch gekennzeichnet, dass**
die Länge des vorderen Chassisanordnungsabschnitts (2) zwischen **den vorderen Rädern (6) und der Vorderseite des Abschnitts (2)** einen Eingangsplattformbereich (24, 72) bereitstellt, der einen sicheren Raum (28, 74) für einen besetzten Rollstuhl (30) und einen Gang (26, 78) für nicht behinderte Personen unterbringen kann.

2. Personenbeförderungsfahrzeug gemäß Anspruch 1, wobei das Fahrzeug (22, 70) ein Fahrzeug mit hohem Boden ist, das einen oder mehrere Stufen (48) zwischen dem Eingangsplattformbereich (24, 72) und einem Hauptpersonengang (50) aufweist.

3. Personenbeförderungsfahrzeug gemäß Anspruch 1, wobei das Fahrzeug ein Fahrzeug mit niedrigem Boden (70) ist.

4. Personenbeförderungsfahrzeug gemäß einem der Ansprüche 1 bis 3, wobei der vordere Chassisanordnungsabschnitt (2) ausgebildet ist, um den Eingangsplattformbereich (24, 72) bereitzustellen.

5. Personenbeförderungsfahrzeug gemäß einem der Ansprüche 1 bis 3, wobei der vordere Chassisanordnungsabschnitt (2) Verlängerungsstücke (12) inkorporiert.

6. Personenbeförderungsfahrzeug gemäß Anspruch 5, wobei die Verlängerungsstücke (12) länger als 100 mm sind.

7. Personenbeförderungsfahrzeug gemäß Anspruch 5 oder Anspruch 6, wobei die Verlängerungsstücke (12) nach der Fertigung des Chassisabschnitts inkorporiert werden.

8. Personenbeförderungsfahrzeug gemäß einem der Ansprüche 5 bis 7, wobei der vordere Chassisanordnungsabschnitt (2) zwischen dem vorderen Radteilabschnitt und der Vorderseite des Chassisabschnitts verlängert wird.

9. Personenbeförderungsfahrzeug gemäß Anspruch 8, wobei der Chassisabschnitt zwischen dem Lenkgetriebe (10) und der Lenksäule (8) verlängert wird.

10. Personenbeförderungsfahrzeug gemäß einem der vorhergehenden Ansprüche, wobei eines oder mehrere Sicherungsmittel zum Sichern eines Rollstuhls (30) an dem Fahrzeug (22, 70) bereitgestellt ist/sind.

11. Personenbeförderungsfahrzeug gemäß einem der vorhergehenden Ansprüche, das eine, zwei oder mehrere Türen (42A, 44A) für den Eingangsplattformbereich (24, 72) aufweist.

12. Personenbeförderungsfahrzeug gemäß Anspruch 11, das eine Tür (44A), die an den Rollstuhl sicheren Raum (28, 74) angrenzt, und eine Tür (42A) für den Gang (26, 78) für nicht behinderte Personen aufweist.

13. Personenbeförderungsfahrzeug gemäß einem der vorhergehenden Ansprüche, das ein Mittel für den Rollstuhl (30) und die an den Rollstuhl gebundene Person (32, 86) zum Ein- und Aussteigen in das und aus dem Fahrzeug (22, 70) aufweist.

14. Personenbeförderungsfahrzeug gemäß Anspruch 13, wobei das Mittel ein Rampenmittel (60) oder ein Anhebungsmittel beinhaltet, das zwischen dem Eingang des Fahrzeugs und der Bodenfläche angeordnet sein kann.

15. Personenbeförderungsfahrzeug gemäß Anspruch 13 oder Anspruch 14, wobei das Mittel manuell betätigt wird.

16. Personenbeförderungsfahrzeug gemäß Anspruch 13 oder Anspruch 14, wobei das Mittel automatisch betätigt wird.

17. Personenbeförderungsfahrzeug gemäß einem der vorhergehenden Ansprüche, wobei der Rollstuhl sichernde Raum (28, 74) einen nutzbaren Raum in der Abwesenheit einer Person mit Rollstuhl bereitstellt.

18. Personenbeförderungsfahrzeug gemäß Anspruch 17, wobei der Raum (28, 84) ein Sitzraum für zumindest eine nicht behinderte Person ist.

19. Personenbeförderungsfahrzeug gemäß einem der vorhergehenden Ansprüche, wobei der Eingangsplattformbereich (24, 72) Unterteilungsmittel zum Unterteilen des Rollstuhlraums (28, 74) und des Gangs (26, 78) für die nicht behinderten Personen aufweist.

20. Personenbeförderungsfahrzeug gemäß Anspruch 19, wobei alle oder ein Teil der Unterteilungsmittel bewegbar und/oder entfernbar sind/ist.

21. Personenbeförderungsfahrzeug gemäß einem der vorhergehenden Ansprüche, wobei der Rollstuhlraum (28, 74) es dem Benutzer (32, 86) des Rollstuhls ermöglicht, während des Transports rückwärts zu sitzen.

22. Personenbeförderungsfahrzeug gemäß einem der vorhergehenden Ansprüche, wobei der Rollstuhlraum (28, 74) und der Gang (26, 78) innerhalb des Eingangsplattformbereichs (24, 72) versetzbar sind.

## Revendications

1. Un véhicule de service passagers (22, 70) ayant une portion d'assemblage de châssis avant (2) et une portion d'assemblage de châssis arrière, et une plate-forme d'entrée dans le véhicule pour que des passagers accèdent au véhicule (22, 70), la plate-forme d'entrée dans le véhicule étant située complètement ou substantiellement au-dessus de la partie supérieure de la portion d'assemblage de châssis avant (2) et à côté du coin chauffeur,
**caractérisé en ce que**
la longueur de la portion d'assemblage de châssis avant (2) entre les roues avant (6) et l'avant de la portion (2) fournit un coin plate-forme d'entrée (24, 72) dans lequel peuvent loger un espace sécurisé (28, 74) pour un fauteuil roulant occupé (30) et un couloir de service pour passagers valides (26, 78).

2. Un véhicule de service passagers selon la revendication 1 dans lequel le véhicule (22, 70) est un véhicule à plancher haut ayant une ou plusieurs marches (48) entre le coin plate-forme d'entrée (24, 72) et une allée centrale pour passagers principale (50).

3. Un véhicule de service passagers selon la revendication 1 dans lequel le véhicule est un véhicule à plancher bas (70).

4. Un véhicule de service passagers selon n'importe laquelle des revendications 1 à 3 dans lequel la portion d'assemblage de châssis avant (2) est formée pour fournir le coin plate-forme d'entrée (24, 72).

5. Un véhicule de service passagers selon n'importe laquelle des revendications 1 à 3 dans lequel la portion d'assemblage de châssis avant (2) incorpore des pièces d'extension (12).

6. Un véhicule de service passagers selon la revendication 5 dans lequel les pièces d'extension (12) font plus de 100 mm de long.

7. Un véhicule de service passagers selon la revendication 5 ou la revendication 6 dans lequel les pièces d'extension (12) sont incorporées après production de la portion de châssis.

8. Un véhicule de service passagers selon n'importe laquelle des revendications 5 à 7 dans lequel la portion d'assemblage de châssis avant (2) est étendue entre la section de roues avant et l'avant de la portion de châssis.

9. Un véhicule de service passagers selon la revendication 8 dans lequel la portion de châssis est étendue entre le boîtier de direction (10) et la colonne de direction (8).

10. Un véhicule de service passagers selon n'importe laquelle des revendications précédentes dans lequel un ou plusieurs moyens d'assujettissement sont fournis pour assujettir un fauteuil roulant (30) au véhicule (22, 70).

11. Un véhicule de service passagers selon n'importe lesquelles des revendications précédentes ayant une, deux ou plusieurs portes (42A, 44A) pour le coin plate-forme d'entrée (24, 72).

12. Un véhicule de service passagers selon la revendication 11 ayant une porte (44A) adjacente à l'espace sécurisé pour fauteuil roulant (28, 74), et une porte (42A) pour le couloir de service pour passagers valides (26, 78).

13. Un véhicule de service passagers selon n'importe laquelle des revendications précédentes ayant un moyen pour faire monter et descendre du véhicule (22, 70) le fauteuil roulant (30) et le passager en fauteuil roulant (32, 86).

14. Un véhicule de service passagers selon la revendication 13 dans lequel le moyen comporte un moyen formant rampe (60) ou un moyen élévateur pouvant être situé entre l'entrée du véhicule et la surface au sol.

15. Un véhicule de service passagers selon la revendication 13 ou la revendication 14 dans lequel le moyen est à actionnement manuel.

16. Un véhicule de service passagers selon la revendication 13 ou la revendication 14 dans lequel le moyen est à actionnement automatique.

17. Un véhicule de service passagers selon n'importe laquelle des revendications précédentes dans lequel l'espace de sécurisation pour fauteuil roulant (28, 74) fournit un espace utilisable en l'absence de passager en fauteuil roulant.

18. Un véhicule de service passagers selon la revendication 17 dans lequel l'espace (28, 84) est un espace où peut s'asseoir au moins un passager valide.

19. Un véhicule de service passagers selon n'importe laquelle des revendications précédentes dans lequel le coin plate-forme d'entrée (24, 72) a un moyen formant cloison pour cloisonner l'espace pour fauteuil roulant (28, 74) et le couloir de service pour passagers valides (26, 78).

20. Un véhicule de service passagers selon la revendication 19 dans lequel l'intégralité ou une partie du moyen formant cloison est mobile et/ou amovible.

21. Un véhicule de service passagers selon n'importe laquelle des revendications précédentes dans lequel l'espace pour fauteuil roulant (28, 74) permet à la personne en fauteuil roulant (32, 86) de tourner le dos à la route pendant le transport.

22. Un véhicule de service passagers selon n'importe laquelle des revendications précédentes dans lequel l'espace pour fauteuil roulant (28, 74) et le couloir de service (26, 78) peuvent être resitués dans le coin plate-forme d'entrée (24, 72).
